# EUROPÄISCHE PATENTSCHRIFT

(11) **EP 1 637 426 B1**
(45) Veröffentlichungstag und Bekanntmachung des Hinweises auf die Patenterteilung: **09.05.2012**
(21) Anmeldenummer: 05019730.0
(22) Anmeldetag: 10.09.2005
(51) Int. Cl.: B61G 11/16, F16F 7/12

(54) **Puffersystem**
Buffer assembly
Tampon

(30) Priorität: 17.09.2004 DE 102004045600
(43) Veröffentlichungstag der Anmeldung: 22.03.2006
(73) Patentinhaber: Keystone Bahntechnik GmbH, 57638 Neitersen (DE); Oleo International Limited, Exhall, Coventry CV7 9ND (GB)
(72) Erfinder: Niessner, Matthias, 61137 Schöneck (DE); Mombour, Klaus, 47447 Moers (DE); Williams, Terry, Ernesford Grange Coventry CV3 2QG (GB)
(74) Vertreter: Maxton Langmaack & Partner

(56) Entgegenhaltungen:
- EP-A1- 1 247 716
- FR-A1- 2 730 025
- FR-A1- 2 836 108
- US-A- 2 423 877

## Beschreibung

Die vorliegende Erfindung betrifft ein Puffersystem, umfassend einen Pufferstößel, eine Pufferhülse und ein Dämpfungsteil, sowie ein Verfahren zur Herstellung eines Pufferstößels.

Zweistufig reagierende Puffersysteme sind unter der Bezeichnung TSB (Two Stage Buffer = zweistufiger Puffer) aus dem Stand der Technik bekannt. So offenbart beispielsweise EP 1 247 716 A1 einen zweistufigen Puffer, welcher insbesondere zur vorherigen Einstellung der dort angreifenden Kräfte ein Dämpfungselement und ein mit diesem in Reihe verbundenes verformbares Hülsenelement umfasst, wodurch die Kräfte von dem Dämpfungselement auf das Hülsenelement übertragbar sind und das Dämpfungselement in einem Kraft übertragenden Eingriff mit dem verformbaren Hülsenelement steht. Dabei weist das verformbare Hülsenelement ein plastisch verformbares hohles Rohr auf, welches eine innere Verjüngung aufweist, sowie ein verformendes Element, das einen im Wesentlichen zum Inneren des Hülsenrohrs komplementären äußeren Querschnitt und eine äußere Verjüngung aufweist, wobei das verformende Hülsenelement so in das Hülsenrohr eingesetzt ist, dass die Verjüngung des verformenden Elements in der Lage ist, Kräfte auf die innere Verjüngung des Rohrzylinders auszuüben, und umgekehrt. Zur Erzielung eines sicheren Sitzes des Dämpfungselements im Hülsenelement umfasst dabei der Rohrzylinder zwei gegenseitig divergente Verjüngungen. Durch die spezielle Ausbildung des Sitzes des Dämpfungselements im Hülsenelement des zweistufigen Puffers soll dabei eine Vorherbestimmung der eingreifenden Kräfte bei Betätigung des Puffers möglich sein.

Zweistufige Puffer zeichnen sich grundsätzlich dadurch aus, dass diese zunächst einen reversiblen Arbeitsbereich aufweisen, in welchem der Puffer ohne eine Materialzerstörung des Pufferstößels, der Pufferhülse oder des Dämpfungssystems arbeitet. Hieran schließt sich bei zweistufigen Puffern ein irreversibler Bereich an, in welchem durch beispielsweise Aufweitungen der Pufferhülse durch Eindrückung des Pufferstößels mit dem Dämpfungselement Kräfte abgefangen werden. Andere zweistufige Puffersysteme arbeiten derart, dass keine Aufweitung der Pufferhülse erfolgt, sondern vielmehr durch Einschieben des Pufferstößels samt des Dämpfungssystems im Falle eines Crashs das auf den Pufferteller des Pufferstößels treffende Hülsenrohr durch diesen umgelenkt und abgeschält wird. Ein derartiges System ist beispielsweise in der DE 100 37 050 A1 offenbart. Nachteilig an der dort offenbarten Ausführungsform ist jedoch insbesondere, dass das Dämpfungssystem im irreversiblen Bereich bei Betätigung des irreversiblen Teils unwiederbringlich abschert.

Ist gewünscht, das Dämpfungssystem, welches beispielsweise als Hydraulikkapsel oder Elastomerfeder ausgebildet sein kann, unversehrt nach einem Crash zurückzugewinnen, so muss entweder der Puffer sehr groß dimensioniert werden, oder aber es müssen zusätzliche Crash-Elemente wie beispielsweise Crash-Boxen vorgesehen werden.

US 2,423,877 offenbart ein Puffersystem mit einem Pufferstößel und einer Pufferhülse, welches sich maßgeblich dadurch auszeichnet, dass dieses drei Bremsschuhe, angeordnet in einem Raum zwischen dem Ende der Pufferhülse und dem in diese aufgenommenen Pufferstößel, offenbart.

FR 2 836 108 A1 offenbart ein Puffersystem mit einer Pufferhülse und einem Pufferstößel, wobei zur Erzielung einer Auffaltung im Falle eines Crashs ein Raum zwischen dem außen geführten Pufferstößel und der. Pufferhülse mit einem Bereich verringerter Wandstärke im Pufferstößel gebildet ist.

Es ist daher Aufgabe der vorliegenden Erfindung, ein Puffersystem zur Verfügung zu stellen, welches die vorstehend genannten Nachteile nicht aufweist, und insbesondere das bei vorgegebenem minimalem Bauraum zusätzlich zum üblichen reversiblen Verformungsweg einen maximalen irrreversiblen Verformungsweg zulässt.

Diese Aufgabe wird erfindungsgemäß gelöst durch ein Puffersystem mit einem Pufferstößel, einer Pufferhülse und einem Dämpfungsteil, wobei der Pufferstößel einen Pufferteller sowie ein von diesem ausgehendes Rohr umfasst, wobei das Rohr in dem der Pufferhülse zugewandten Teil einen Bereich verringerter Wandstärke aufweist, in welchem mindestens eine Gluerschnittserweiterung des Rohrs angeordnet ist. Der Pufferstößel ist bevorzugt auf dem Dämpfungsteil bewegbar geführt.

Durch eine derartige Ausbildung des Puffersystems ist es vorteilhaftervveise möglich, dass dieses nicht nur puffernde bzw. dämpfende Eigenschaften aufweist, sondern zusätzlich das Puffersystem insgesamt, insbesondere jedoch der Pufferstößel, als Deformationswerkzeug benutzt wird. Durch die Vorsehung der Querschnittserweiterung im Bereich verringerter Wandstärke im Stößelrohr wird ein Triggermechanismus implementiert, wodurch bei einem Arbeiten im irreversiblen Bereich, d.h. einem Crash, mindestens eine, bevorzugt jedoch zwei oder auch mehrere Faltungen des Stößelrohrs erhalten werden. Hierdurch ist es weiter vorteilhaft möglich, dass das Dämpfungssystem, welches den Pufferstößel führt, unzerstört wiedergewonnen werden kann. Zusätzlich ist das erfindungsgemäße Puffersystem hierdurch sehr kurzbauend.

Das erfindungsgemäße Puffersystem kann daher für jede Art Puffer Einsatz finden, sei es als Seitenpuffer, Diagonalpuffer, Puffer für Güterzugwaggons bzw. Personenwagen oder für entsprechende Lokomotiven. Gleichzeitig kann das Puffersystem auch Einsatz finden bei jeder sonstigen Art von Fahrzeugen, welche Puffersysteme aufweisen, wie beispielsweise Straßenbahnen.

Im Unterschied zu aus dem Stand der Technik bekannten zweistufigen Puffern wird eine solche mehrstufige Arbeitsweise nicht durch Hinzufügung eines Deformations- oder Scherelements erreicht, sondern durch eine Zusammenfassung von Dämpfungsfunktionen und Deformationsfunktionen in den einzelnen Bauteilen.

Das erfindungsgemäße Puffersystem arbeitet dabei dergestalt, dass zunächst bei einer Betätigung des Puffersystems im reversiblen Bereich, ausgehend von einem nicht belasteten Puffer, der Pufferstößel in Richtung der Pufferhülse bewegt und dabei das Dämpfungsteil beansprucht wird. Der Pufferstößel wird bevorzugt über das Dämpfungsteil geführt, wobei die Führung durch mindestens einen auf dem Dämpfungsteil aufgebrachten Führungsring, welcher bevorzugt einteilig mit dem Dämpfungsteil ausgebildet ist, sichergestellt. Vorteilhafterweise erfolgt die Führung durch mindestens einen entsprechend ausgebildeten Wulst, angeordnet am Außenumfang der Pufferhülse und/oder des Dämpfungsteils. Erfolgt eine Entlastung des Puffersystems, so wird dieses wieder in die Ausgangsstellung zurücküberführt. Bei Beaufschlagung des erfindungsgemäßen Puffersystems mit größeren Kräften, wie diese im Falle eines Crashs auftreten, erfolgt hier zunächst eine Bewegung des Dämpfungssystems über den Pufferstößel in die Pufferhülse hinein, wodurch diese aufgeweitet wird. Hier kann davon gesprochen werden, dass das erfindungsgemäße Puffersystem im beginnenden irreversiblen Bereich gleichwohl reversibel arbeitet, da dieses bei einer Aufweitung der Pufferhülse im beginnenden irreversiblen Bereich gleichwohl wieder in die Ausgangsposition zurückstellen kann. Denn der Pufferstößel wird ja maßgeblich durch das Dämpfungssystem geführt, welches auch bei einem Arbeiten im vollen irreversiblen Bereich unbeschadet bleibt. Durch die in diesem eingestellte Vorspannung wird der Pufferstößel wieder in seine Ausgangsstellung zurückkehren. Erst bei Einbringung noch größerer Kräfte wird nach erfolgter Aufweitung der Pufferhülse der Triggermechanismus des Pufferstößels ausgelöst, so dass hier eine Bildung mindestens einer Faltung, in aller Regel jedoch von mindestens zwei Faltungen, im Bereich verringerter Wandstärke erfolgt. Diese Faltung erfolgt spätestens dann, wenn das der Pufferhüise zugewandte Ende des Pufferstößels auf das Befestigungsteil der Pufferhülse trifft, mit welchem diese beispielsweise an einer Trägerkonstruktion eines Schienenfahrzeugs befestigt ist. Das Befestigungsteil der Pufferhülse kann dabei insbesondere als Flansch ausgebildet sein. Es kann jedoch auch einen massiven Hülsenboden aufweisen. Somit kann das erfindungsgemäße Puffersystem sogar als dreistufig arbeitendes Puffersystem angesprochen werden.

Vorteilhafterweise ist im Bereich der Querschnittserweiterung die Wandstärke des Stößelrohrs in etwa gleich ausgebildet wie im Bereich der verringerten Wandstärke desselben. Weiter vorteilhaft ist die Querschnittserweiterung nahe des dem Pufferteller des Pufferstößels zugewandten Wandstärkenübergangs angeordnet. Der Bereich verringerter Wandstärke kann dabei durch jede Art mechanischer Bearbeitung hergestellt werden, insbesondere durch Fräsen oder Drehen vorgeformter Pufferstößel. Die Pufferstößel selbst können dabei insbesondere durch Warmfließpressen hergestellt sein, ebenso wie die Pufferhülsen.

Die Querschnittserweiterung des Pufferstößels ist dabei vorzugsweise als am Innenumfang des Rohrs umlaufende Ringnut ausgebildet. Die Ringnut weist dabei weiter vorteilhaft eine in etwa radiale Querschnittsform auf, kann jedoch auch andere Querschnittsformen, beispielsweise als V-förmige Kerbe, aufweisen. Je nach Steilheit und Durchmesser/Abmessung der Querschnittsform der Ringnut kann eine gezielte Triggerung des Faltungsmechanismus' im Falle eines Crashs des Pufferstößels erzielt werden. Es kann auch vorgesehen sein, dass mehr als eine Querschnittserweiterung im Bereich verringerter Wandstärke im Pufferstößel vorgesehen wird, wodurch entsprechend auch mehrfache Faltungen erzielbar sind.

Der Wandstärkenübergang im Stößelrohr, d.h. der Bereich des Übergangs von normaler Wandstärke auf den Bereich verringerter Wandstärke des Stößelrohrs, kann dabei derart ausgebildet sein, dass eine senkrechte Kante ausgebildet wird. Alternativ kann jedoch auch vorgesehen sein, dass dieser Übergang abgeschrägt, auch abgerundet oder polygonal, ausgebildet wird, insbesondere um hier frühzeitige Rissbildungen durch Materialschwächungen zu vermeiden.

Der Pufferstößel ist mit dem Dämpfungsteil bewegbar verbunden. Vorteilhafterweise erfolgt diese Verbindung durch mindestens eine vom Pufferteller ausgehend ausgebildete Langbohrung im Pufferstößel, in welche mindestens ein Befestigungselement einbringbar ist. Durch dieses Befestigungselement kann der Pufferstößel sicher mit dem Dämpfungsteil verbunden werden. Zudem erfolgt durch die Vorsehung einer Langbohrung eine Zwangsführung als auch eine Verdrehsicherung des erfindungsgemäßen Puffersystems. Der Pufferstößel weist dabei bevorzugt genau zwei Langbohrungen auf. Im Bereich einer Langbohrung sind vorzugsweise Materialanhäufungen vorgesehen, welche am Außenumfang des Pufferstößels angeordnet sind. Diese nehmen vorzugsweise in Richtung auf den Pufferteller des Pufferstößels hin zu. Vorteilhafterweise sind die Materialanhäufungen dabei in etwa kegelstumpfförmig ausgebildet, wobei der Boden des Kegelstumpfs in den Pufferteller des Pufferstößels übergeht. Durch diese Materialanhäufungen im Bereich der Langbohrung im Pufferstößel werden die im Falle eines Crashs auftretenden Kräfte weitergeleitet, so dass der Triggermechanismus sicher ausgelöst wird. Zudem wird hierdurch Materialermüdungen vorgebeugt.

Das Befestigungselement, mit welchem der Pufferstößel mit dem Dämpfungsteil verbunden wird, umfasst ein in etwa L-förmig ausgebildetes Grundelement, dessen kurzer Schenkel auf der dem Pufferteller zugewandten Seite zumindest teilflächig formschlüssig, bevorzugt vollflächig formschlüssig, zu einer Wand des Dämpfungsteils ausgebildet ist, d.h. an dieser anliegt. Diese Wand kann dabei durch einen umlaufenden Ringwulst, angeordnet am Außenumfang des Dämpfungsteils, der bevorzugt auch als Führung des Pufferstößels dient, gebildet werden. Dabei kann dieser Ringwulst gleichzeitig eine Führungsfunktion für den Pufferstößel auf dem Dämpfungsteil wahrnehmen. Alternativ kann die Wand Teil einer Ausnehmung sein, beispielsweise in Form einer Ringnut, welche am Außenumfang des Dämpfungsteils eingebracht ist. Durch die Ausbildung des Grundelements wird eine Verdrehsicherung des erfindungsgemäßen Puffersystems erzielt. Gleichzeitig werden die bei einem Crash auftretenden Kräfte über den Pufferstößel auch über das Befestigungselement auf das Dämpfungsteil übertragen. Ein Verkippen wird durch die formschiüssige und zumindest teilflächige Anordnung des kurzen Schenkels an der Wand des Dämpfungsteils ebenfalls sicher vermieden. Der lange Schenkel des Grundelements selbst dient vorzugsweise gleichzeitig als Passfeder.

In einer alternativen Ausführungsform kann das Grundelement auch mehrteilig ausgebildet sein. Dabei kann beispielsweise der kurze vom langen Schenkel getrennt werden, wodurch dann dem langen Schenkel ausschließlich die Funktion einer Passfeder zukommt.

Das Grundelement ist bevorzugt einstückig ausgebildet. Das Befestigungselement umfasst weiterhin mindestens ein Befestigungsmittel, welches insbesondere in einer Bohrung des Grundelements aufnehmbar ist. Hierdurch wird eine sichere Verbindung des Pufferstößels mit dem Dämpfungsteil erzielt, das Puffersystem wird hierdurch verschlossen. Der lange Schenkel des Grundelements ist in einer weiter bevorzugten Ausführungsform über seine gesamte Länge in der Langbohrung des Stößelrohrs angeordnet.

In einer weiter vorteilhaften Ausführungsform des erfindungsgemäßen Puffersystems weist die Hülse an ihrem dem Dämpfungsteil zugewandten Ende einen Sitz zur Aufnahme desselben auf und einen an den Sitz anschließendes rohrartig ausgebildetes Teil mit einem Bereich verringerter Wandstärke, wobei die Wandstärke dieses Rohrteils, d.h. des Hülsenrohrs, in Richtung auf das dem Dämpfungssystem entgegengesetzte Ende der Hülse zunimmt. Dabei sind bevorzugt der Sitz und der Bereich verringerter Wandstärke durch ein Zwischenelement voneinander getrennt, müssen es aber nicht sein. Die Zunahme der Wandstärke kann dabei stetig und/oder schrittweise, auch in einem Schritt, erfolgen.

Durch eine derartige Ausgestaltung der Pufferhülse wird im erfindungsgemäßen Puffersystem ermöglicht, die im Falle eines Crashs bei Kontakt des Pufferstößels mit der Pufferhülse auftretenden Lastpeaks zumindest teilweise zu kompensieren. Hierdurch wird ein gleichmäßiger Kraftverlauf über den gesamten Crashweg erzielt und hierdurch die Gefahr von Schäden in der nachgeordneten Fahrzeugstruktur bei einem Crashsicher vermieden. Dabei muss der Bereich verringerter Wandstärke in der Pufferhülse nachfolgend dem Sitz im Hinblick auf die Abmessungen und Anordnung des Pufferstößels gewählt werden. Hierdurch ist es möglich, im Hinblick auf die unterschiedlichen Anwendungsgebiete des erfindungsgemäßen Puffersystems stets auch im Hinblick auf die konkrete Einzelanwendung abgestimmte Pufferhülsen einzusetzen. Durch einfache Verschiebung des Bereichs verringerter Wandstärke im Hülsenrohr nachfolgend dem Sitz kann dieses einfach erzielt werden.

Im Bereich der verringerten Wandstärke des Hülsenrohrs ist vorteilhafterweise eine Innenquerschnittserweiterung ausgebildet. Der Innenquerschnitt des Hülsenrohrs weist dabei weiter vorteilhafterweise eine Abnahme in Richtung auf das dem Dämpfungsteil entgegengesetzte Ende der Hülse auf.

In einer vorteilhaften Ausbildungsform weist dabei das Zwischenelement auf seiner dem Bereich verringerter Wandstärke zugewandten Seite eine abfallende Schulter auf. Das Zwischenelement hat grundsätzlich die Funktion, die Pufferhülse in unterschiedliche Funktionsbereiche aufzuteilen. Einerseits soll durch die Pufferhülse ja ein sicherer Sitz des Dämpfungsteils vermittelt werden, andererseits soll gemäß der Erfindung eine Verringerung der bei einem Crash auftretenden Lastpeaks neben einer Aufweitung der Hülse, wie diese aus dem Stand der Technik für zweistufige Puffer bekannt ist, erfolgen. Dadurch kann durch Dimensionierung des Zwischenelements, insbesondere dessen Längserstreckung in Längsrichtung der Pufferhülse, ebenfalls Einfluss bei der Einstellung der Pufferhülse im Hinblick auf die Vermeidung von Lastpeaks genommen werden. Die Schulter ist dabei derart ausgebildet, dass durch diese ein Wandstärkenübergangsbereich gebildet wird. Die Steilheit und Ausbildung der Schulter als auch der Winkel, in welchem diese im Verhältnis zum im Bereich des Zwischenelements vorliegenden Innenumfang des Hülsenrohrs gewählt ist, beeinflussen ebenfalls das Verhalten des erfindungsgemäßen Puffersystems im Fall eines Crashs. Somit kann auch durch die gezielte Ausbildung dieses Übergangsbereichs, d.h. der in diesem angeordneten Schulter im Hinblick auf deren konkrete Ausbildung, Steilheit und Winkel, gezielt die Pufferhülse derart eingestellt werden, dass auftretende Lastpeaks im Falle eines Crashs zumindest teilweise kompensiert werden. Der Winkel kann dabei zwischen 0° und 90° betragen. Der Übergang kann dabei stetig, d.h. linear, oder aber auch abgerundet, polygonal und sigmoidal ausgebildet sein. Weiter weisen vorteilhafterweise das Zwischenelement und der Sitz eine in etwa gleiche Wandstärke auf.

In einer weiteren vorteilhaften Ausführungsform des erfindungsgemäßen Puffersystems ist die Innenwandung des Stößelrohrs zumindest teilweise beabstandet von der Außenwandung des Hülsenrohrs bei einer Betätigung des Puffersystems geführt. Hierzu kann insbesondere am Außenumfang des Hülsenrohrs eine Ausnehmung vorgesehen sein, wobei in den dann bei Führung des Pufferstößels im Falle eines irreversiblen Arbeitens in dem dann zwischen Stößelrohr und Hülsenrohr gebildeten Freiraum die Aufweitung der Pufferhülse, hervorgerufen durch das in deren Innere hinein arbeitende Dämpfungsteil, erfolgt. Hierdurch wird, bei einem Arbeiten des erfindungsgemäßen Puffersystems im beginnenden irreversiblen Bereich eine zumindest Teilreversibilität desselben sichergestellt.

Das Dämpfungsteil des erfindungsgemäßen Puffersystems arbeitet vorzugsweise hydraulisch oder als Federsystem. Vorteilhafterweise umfasst das Dämpfungsteil eine Hydraulikkapsel oder wird durch diese gebildet, in einer alternativen Ausführungsform umfasst das Dämpfungsteil vorzugsweise eine Elastomerfeder. Es kann weiter alternativ jedoch auch ein aus einem Polymer- oder Gummimaterial bestehendes Dämpfungssystem eingesetzt werden. Bei Vorsehung einer als Ringfeder ausgebildeten Elastomerfeder ist diese vorteilhafterweise in einem Federbecher aufgenommen. Dieser Federbecher weist eine Außenkontur auf, welche sich passgenau in den Sitz der Pufferhülse einfügt. Ebenso ist das Zylinderrohr der Hydraulikkapsel bei Verwendung einer solchen im Bereich des Sitzes ihrer Außenkontur nach der Innenkontur des Sitzes der Pufferhülse angeformt. Die Hydraulikkapsel kann dabei im erfindungsgemäßen Puffersystem jedoch auch umgekehrt eingebaut sein, wobei dann der Plunger der Dämpfungskapsel wiederum eine Außenkontur aufweist, welche der Innenkontur des Sitzes der Pufferhülse angeformt ist.

Das Dämpfungsteil ist mit der Hülse bevorzugt fest verbunden, insbesondere durch eine Spannverbindung. Hierdurch wird erzielt, dass die zur Führung des Puffersystems notwendigen Biegekräfte als auch die zur Verdrehsicherung des Puffertellers angreifenden Drehmomente aufgenommen und übertragen werden. Längsdruckkräfte unterhalb der Ansprechkraft des Triggermechanismus' in dem Pufferstößel als Deformationselement werden ebenfalls übertragen.

Man kann davon sprechen, dass in einer solchen Anordnung keine Hülse mehr vorliegt, sondern ein einheitliches Bauteil. Die Verbindung erfolgt bevorzugt über im Kopfbereich des Sitzes der Hülse angeordnete Befestigungsmittel, die Vorsehung weiterer Bauteile wie Scherelemente o.ä. im Inneren der Hülse ist nicht notwendig.

Die vorliegende Erfindung betrifft weiterhin einen Pufferstößel, , wie dieser im erfindungsgemäßen Puffersystem Verwendung finden kann.

Des Weiteren betrifft die vorliegende Erfindung ein Verfahren zur Herstellung eines Pufferstößels, wobei
- in einem ersten Schritt ein vorgeformter Pufferstößel, versehen mit einem Bereich verringerter Wandstärke im Stößelrohr, auf eine Haltevorrichtung aufgesetzt wird;
- in einem zweiten Schritt ein Konusring im Inneren des Stößelrohrs angeordnet wird an der Stelle, an der eine Querschnittserweiterung eingebracht werden soll; und
- in einem dritten Schritt über ein zum Konusring komplementär ausgebildetes Stempelelement der Konusring in Richtung auf die Innenwandung des Stößelrohrs bewegt und dadurch die Querschnittserweiterung eingebracht wird.

Schließlich betrifft die vorliegende Erfindung ebenfalls ein Verfahren zur Verminderung von Lastpeaks bei der Betätigung eines Puffersystems durch Kontakt eines Pufferstößels mit einem Befestigungsteil einer Pufferhülse, wobei entsprechend der Abmessungen des Pufferstößels und der Anordnung desselben im Puffersystem in der Hülse ein Bereich einer Wandstärkenverringerung vorgesehen wird, wodurch der Lastpeak zumindest teilweise kompensiert wird.

Diese und weitere Vorteile werden anhand der folgenden Figuren näher erläutert. Es zeigen:
- Fig. 1:: eine erste Ausführungsform des erfindungsgemäßen Puffersystems mit einer Hydraulikkapsel im unbelasteten Zustand in einer Teilschnittansicht;
- Fig. 2:: die Ausführungsform gemäß Fig. 1 im belasteten Zustand nach einem Crash;
- Fig. 3:: eine alternative Ausführungsform des erfindungsgemäßen Puffersystems mit einer Ringfeder in einem Federbecher im unbelasteten Zustand;
- Fig. 4:: die erfindungsgemäße Hülse in einer Schnittansicht;
- Fig. 5:: einen erfindungsgemäßen Pufferstößel in einer Schnittansicht;
- Fig. 6:: ein Befestigungselement in einer Schnittansicht;
- Fig. 7:: das Befestigungselement gemäß Fig. 6 in einer Aufsicht; und
- Fig. 8:: ein Werkzeugs zur Erzeugung einer Querschnittserweiterung in einem Puf- ferstößel in einer Schnittansicht.

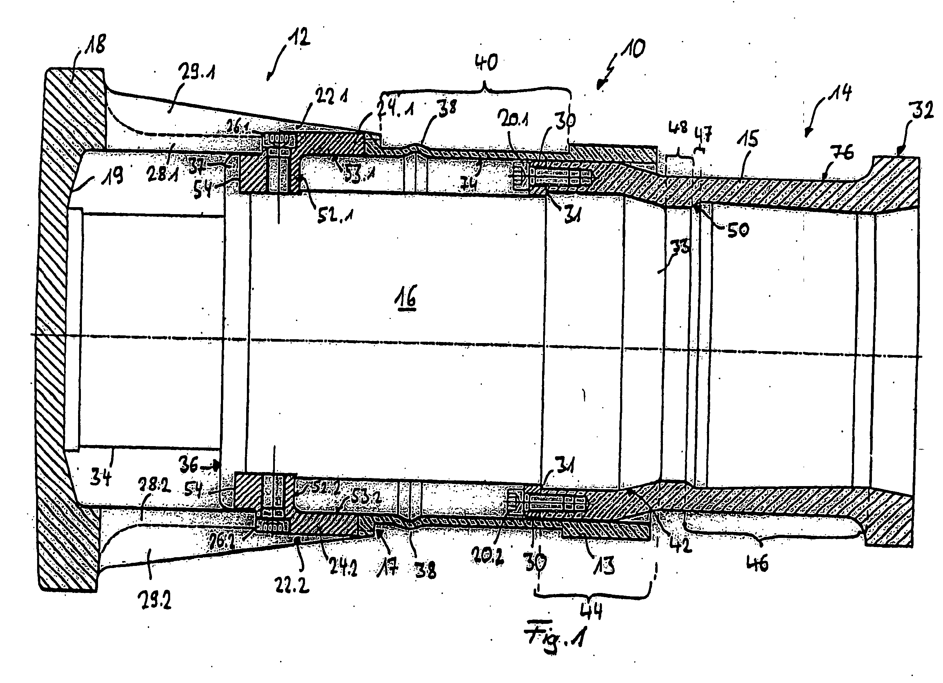

Fig. 1 zeigt das insgesamt mit dem Bezugszeichen 10 bezeichnete erfindungsgemäße Puffersystem mit einem Pufferstößel 12, einer Pufferhülse 14 und einem als Hydraulikkapsel 16 ausgebildeten Dämpfungsteil. Die Hydraulikkapsel 16 weist dabei einen Plunger 34 und ein Zylinderrohr 36 auf. Der Pufferstößel 12 ist auf der Hydraulikkapsel 16 geführt, wobei hier noch gegebenenfalls ein Führungsring vorgesehen ist, welcher jedoch nicht dargestellt ist. Ein solcher Führungsring würde insbesondere im Bereich zwischen den Befestigungselementen 22.1 und 22.2, welche eine sichere Verbindung des Pufferstößels 12 mit der Hydraulikkapsel 16 sicherstellen, und den weiteren Befestigungselementen 20.1 und 20.2, welche einen sicheren Sitz der Hydraulikkapsel 16 im Sitz 44 der Pufferhülse 14 sicherstellen, angeordnet. Der Kopfbereich 37 des Zylinderrohrs 36 der Hydraulikkapsel 16 ist dabei wulstartig ausgebildet zur Bildung eines Führungsrings und kann beispielsweise durch einen Ring ausgebildet sein, welcher mittels eines Gewindes auf das Zylinderrohr 36 verschraubt werden kann. Bevorzugt ist jedoch der Kopfbereich 37 einstückig mit dem Zylinderrohr 36 der Hydraulikkapsel 16 verbunden. Der Kopfbereich 37 sorgt, gegebenenfalls zusätzlich unterstützt durch einen hier nicht gezeigten Führungsring, für eine Führung des Pufferstößels 12 auf der Hydraulikkapsel 16.

Der Plunger 34 der Hydraulikkapsel 16 steht in kraftschlüssigem Kontakt mit der Innenwand 19 des Puffertellers 18. Der Pufferstößel 12 weist weiterhin zwei im Stößelrohr 13 gegenüber angeordnete Langbohrungen 28.1 und 28.2 auf, welche bis zu der Innenwand 19 des Puffertellers 18 ausgebildet sind. Im Bereich der Langbohrungen 28.1 und 28.2 sind Materialanhäufungen 29.1 und 29.2 angeordnet, welche die Langebohrungen 28.1 und 28.2 etwa pyramiden- oder kegelstumpfförmig umgeben.

Der Pufferstößel 12 weist nun einen Bereich verringerter Wandstärke 40 auf mit einer Querschnittserweiterung 38, welche als am Innenumfang des Stößelrohrs 13 umlaufende Ringnut ausgebildet ist. Diese Querschnittserweiterung 38 ist nahe dem Wandstärkenübergang 17 auf der dem Pufferteller 18 zugewandten Teil des Bereichs verringerter Wandstärke 40 angeordnet. Dabei ist dieser Wandstärkenübergang 17 als senkrechte Kante ausgebildet.

Die Hydraulikkapsel 16 ist mittels der Befestigungselemente 22.1 und 22.2, welche aus einem einstückigen Grundkörper 24.1 bzw. 24.2 und einem Befestigungsmittel 26.1 bzw. 26.2 gebildet sind, sicher mit Stößel 12 verbunden. Dabei weist der Grundkörper 24 einen L-förmigen Querschnitt auf, wobei der kurze Schenkel 52.1 bzw. 52.2 an seiner dem Pufferteller 18 zugewandten Seite vollflächig und formschlüssig an einer Wand 54 im Kopfbereich 37 der Hydraulikkapsel 16 anliegt. Hierdurch ist ein Verkanten der Hydraulikkapsel 16 bzw. des Pufferstößels 18 im Betrieb nicht möglich. Zudem werden im Falle eines Crashs auftretende Kräfte durch diese Ausbildung des Befestigungselements 22 sicher übertragen. Das Befestigungselement 22 kann nach einem Crash sicher entfernt und hierdurch die Hydraulikkapsel 16 bzw. auch alternative Dämpfungssysteme wiedergewonnen werden. Mit dem langen Schenkel 53.1 bzw. 53.2 der Grundelemente 24.1 bzw. 24.2 greifen die Befestigungselemente 22.1 bzw. 22.2 über die gesamte Länge in die Langbohrungen 28.1 und 28.2 des Pufferstößels 12 ein (Passfederfunktion). Die Außenkontur des Schenkels 52 und/oder 53 ist dabei der Innenkontur der Langbohrungen 28.1 und 28.2 angeformt.

Die Hydraulikkapsel 16 ist mittels eines Spannrings 30 und der Befestigungsmittel 20.1 und 20.2 sicher im Sitz 44 der Pufferhülse 14 gehalten. Der Innendurchmesser des Sitzes 44 verjüngt sich dabei im Kopfbereich desselben in Richtung auf ein Befestigungsteil 32 der Hülse 14 hin. Der Fußbereich 33 der Hydraulikkapsel 16 ist in seiner Außenkontur bevorzugt formschlüssig der Innenkontur des Sitzes 44 der Pufferhülse 14 angeformt. Im Übergang des Fußbereichs 33 in das Zylinderrohr 36 der Hydraulikkapsel 16 befindet sich eine ringförmig umlaufende Schulter 31, welche teilweise vom Spannring 30 überdeckt wird. Hierdurch ist ein sicherer Halt der Hydraulikkapsel 16 in der Pufferhülse 14 ermöglicht. Im Übrigen können zur Sicherung des Sitzes des Spannrings 30 mehrere Befestigungselemente 20 vorgesehen sein. Die vorstehend beschriebene Art der Befestigung stellt eine vorteilhafte Ausbildung dar, es können auch andere Befestigungsmittel Einsatz finden. Wichtig ist die Erzielung eines festen Sitzes des Dämpfungsteils 16 im Sitz 44 der Hülse 14, insbesondere durch die Angleichung der Außen- bzw. Innenkonturen, um die auftretenden Kräfte zu übertragen.

Die Pufferhülse 14 weist ein Befestigungsteil 32 auf, welches beispielsweise an einer hier nicht näher gezeigten Trägerkonstruktion eines Schienenfahrzeugs, beispielsweise eines Güterwaggons, angebracht sein kann. Dabei ist das Befestigungsteil 32 vorzugsweise als Flansch ausgebildet und wird über mehrere Befestigungselemente, welche in hier nicht näher gezeigte Bohrungen eines solchen flanschförmig ausgebildeten Befestigungsteils 32 eingreifen, sicher mit der Trägerkonstruktion des Schienenfahrzeugs verbunden.

Die Pufferhülse 14 weist weiterhin ein Zwischenelement 48 auf, welches den Sitz 44 von dem Bereich verringerter Wandstärke 46 der Pufferhülse 14 trennt. Dabei ist die Wandstärke des Zwischenelements 48 gleich ausgebildet zu der Wandstärke des Sitzes 44 der Pufferhülse 14. Auf der dem Befestigungsteil 32 der Pufferhülse 14 zugewandten Seite des Zwischenelements 48 ist ein Übergangsbereich 47 gezeigt, welcher eine Schulter 50 aufviieist. Das Zwischenelement 48 und der Bereich verringerter Wandstärke 46, welcher den Übergangsbereich 47 umfasst, bilden das Hülsenrohr 15 der Pufferhülse 14. Die Schulter 50 ist abgeschrägt ausgebildet, kann jedoch je nach Anwendung auch eine andere Steilheit oder Ausbildung aufweisen. So ist auch eine senkrechte Ausbildung, dann als Kante, möglich.

Die Anordnung und Ausbildung des Bereichs verringerter Wandstärke 46, des Übergangsbereichs 47 und des Zwischenelements 48 erfolgen je nach Abhängigkeit der konkreten Anwendungsform des erfindungsgemäßen Puffersystems 10. Dabei müssen insbesondere die Ausbildung und Anordnung des Pufferstößels 12 im Puffersystem 10 berücksichtigt werden. Dabei muss die Pufferhülse 14 so ausgebildet werden, dass im Falle eines Crashs bei Kontakt des Pufferstößels 12 mit der Pufferhülse 14, insbesondere im Bereich des Befestigungsteils 32, aber auch im Kopfbereich 37 des Sitzes 44, d.h. im Bereich der dort angeordneten Befestigungsmittel 20 als auch des Spannrings 30, der dann auftretende hohe Lastpeak zumindest teilweise kompensiert wird. Im Idealfall ist es möglich, im Falle eines Crashs diesen Lastpeak vollständig zu kompensieren, so dass bei einer irreversiblen Arbeit ein gleichmäßiger Kurvenverlauf ohne Lastpeaks im Kraft-Wege-Diagramm erzielt werden kann.

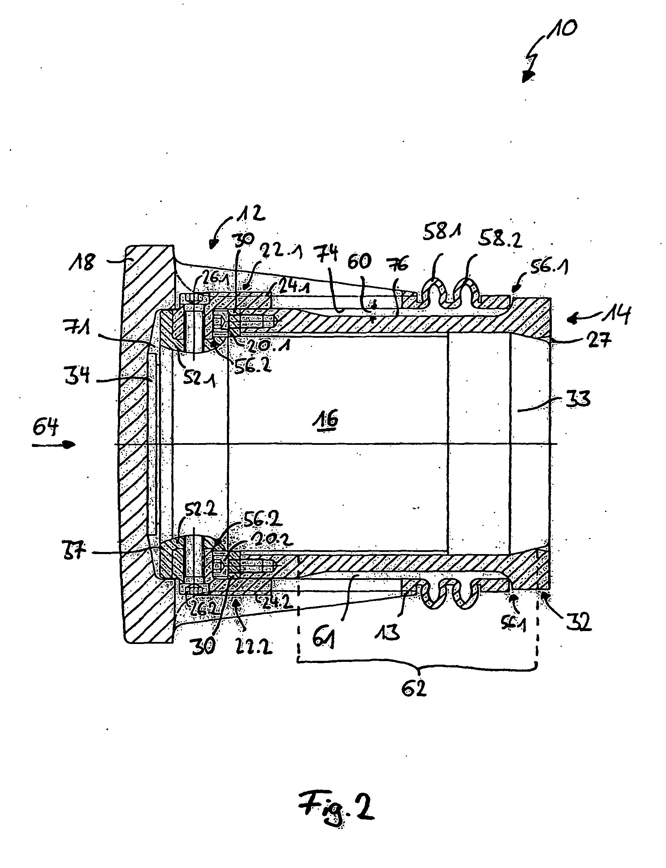

Fig. 2 zeigt nun die Ausführungsform des Puffersystems 10 gemäß Fig. 1 in einer irreversiblen Arbeitsstellung. Dabei wurde aus Gründen der Vereinfachung die Aufweitung der Pufferhülse 14 im Bereich 61 nur geringfügig angedeutet, um hier die Bildung von Faltungen 58.1 und 58.2 im Bereich verringerter Wandstärke des Pufferstößels 12 deutlicher darzustellen. Deutlich ist Fig. 2 zu entnehmen, dass bei einer irreversiblen Bewegung des Puffersystems 10 in Richtung des Pfeils 64 die Hydraulikkapsel 16 zwar in die Pufferhülse 14 hinein vorgetrieben wurde, hierdurch jedoch lediglich eine Verdrängung des Materials der Pufferhülse 14, insbesondere des Hülsenrohrs 15, in den durch die Außenwandung 76 des Hülsenrohrs 15 und die Innenwandung 74 des Stößelrohrs 13 gebildeten Bereich erfolgt. Die Hydraulikkapsel 16 selbst kann im Falle eines Crashs ohne Beschädigung so weit vorgetrieben werden, bis der Boden 27 des Befestigungsteils 32 der Pufferhülse 14 erreicht ist, d.h. in Kontakt mit der Trägerkonstruktion oder aber einer eingebrachten Platte o. ä. des Schienenfahrzeugs gelangt.

Trifft nun das Stößelrohr 13 auf das Befestigungsteil 32 der Pufferhülse 14 an dem Kontaktpunkt 56.1, erfolgt eine Faltenbildung durch den ausgelösten Triggermechanismus, hervorgerufen durch die Querschnittserweiterung 38, eingebracht in den Bereich verringerter Wandstärke 40 im Stößelrohr 13. In Fig. 2 ist die Bildung von zwei Faltungen 58.1 und 58.2 dargestellt, welche in etwa wulstförmig umlaufend im Stößelrohr 13 ausgebildet sind. Das Stößelrohr 13 erstreckt sich im Übrigen bis zur Innenwand 19 des Puffertellers 18 der Pufferhülse 12.

Neben dem Kontaktpunkt 56.1 kann je nach Bauart des erfindungsgemäßen Puffersystems 10 ein weiterer Kontaktpunkt 56.2 auftreten, wobei dann das Befestigungselement 22. 1 bzw. 22.2 in Kontakt mit den weiteren Befestigungselementen 20.1 bzw. 20.2, bzw. dem Spannring 30 tritt. Der Pufferteller 18 des Pufferstößels 12 ist dabei so ausgelegt, dass der kurze Schenkel 52 des Grundelements 24 in einer Ausnehmung 71 zumindest teilweise aufgenommen wird.

Fig. 2 ist weiterhin deutlich zu entnehmen, dass durch die Außenwandung 76 der Pufferhülse 14 und der Innenwandung 74 des Pufferstößels 12 ein Abstand 60 zur Bildung des Freiraums 61 gebildet ist bei einem Arbeiten im irreversiblen Bereich.

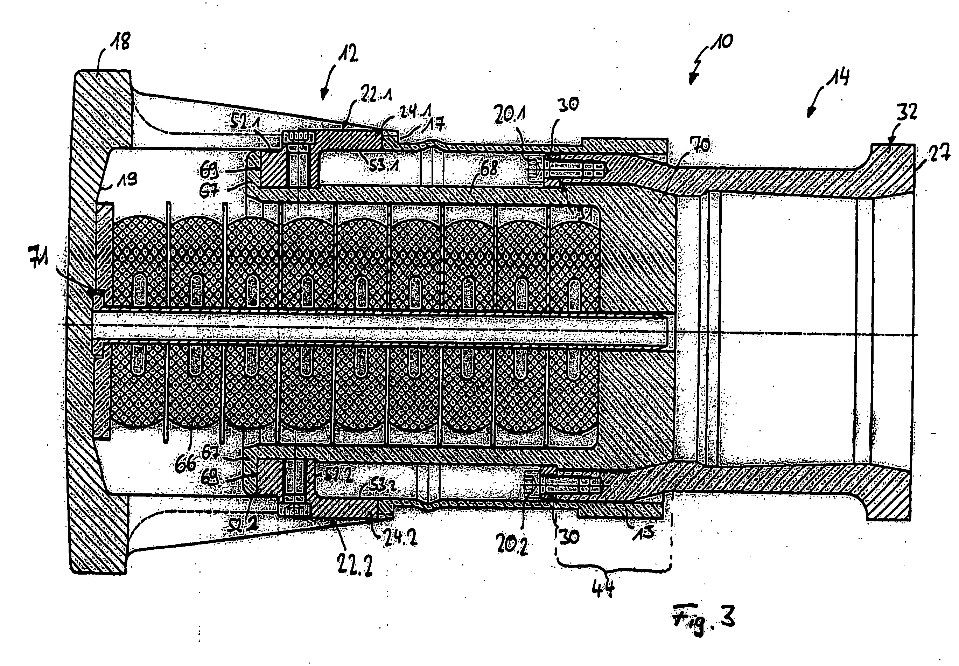

Fig. 3 zeigt eine alternative Ausführungsform zu der in Fig. 1 dargestellten, wobei anstatt einer Hydraulikkapsel 16 als dem Dämpfungssystem eine Feder 26, insbesondere Elastomerfeder, aufgenommen in einem Federbecher 68, vorgesehen ist. Der Federbecher 68 weist dabei wiederum eine Wand 69 auf, an welcher sich der kurze Schenkel 52.1 bzw. 52.2 des Grundelements 24.1 bzw. 24.2 des Befestigungselements 22.1 bzw. 22.2 vollflächig und formschlüssig anlegt. Die Wand 69 wird dabei durch einen ringförmig umlaufenden und im Übrigen einstückig mit dem Federbecher 68 verbundenen Ringwulst 67 gebildet. Der Federbecher 68 ist vorzugsweise ebenso wie die Pufferhülse 14 als auch der Pufferstößel 12 im Warmfließpressverfahren hergestellt. Auf der Innenwand 19 des Puffertellers 18 ist eine Ausnehmung 71 zur Ausrichtung der Feder 66 vorgesehen. Der Federbecher 68 ist entsprechend der in Fig. 1 gezeigten Hydraulikkapsel 16 im Fußbereich 70 in seiner Außenkontur dem Sitz 44 in dessen Kopfbereich der Pufferhülse 14 angeformt. Ein sicherer Sitz wird durch den Spannring 30, welcher einen umlaufenden Vorsprung 31 auf der Außenfläche des Federbechers 68 teilweise überdeckt, und der Befestigungselemente 20.1 bzw. 20.2 sichergestellt. Die Pufferhülse 14 ist wie in Fig. 1 und 2 beschrieben ausgebildet, ebenso der Pufferstößel 12. Bei einer Beaufschlagung mit einer Kraft in Richtung eines wie in Fig. 2 gezeigten Pfeils 64 erfolgt analog zu Fig. 2 eine Arbeit im irreversiblen Bereich. Die Feder 66 und auch der Federbecher 68 werden jedoch in aller Regel unbeschädigt wiedergewonnen.

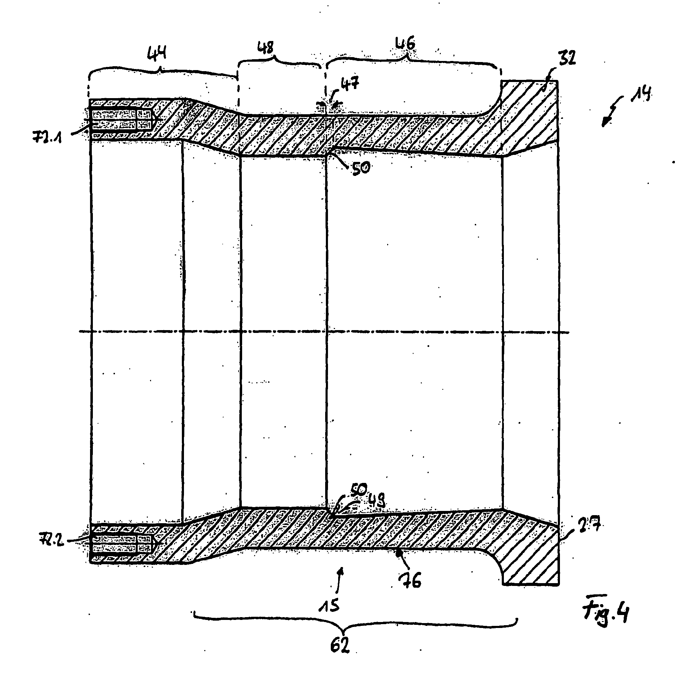

Fig. 4 zeigt die Pufferhülse 14 im Detail. Deutlich sind hier insbesondere die Bohrungen 72.1 und 72.2 zu erkennen, in welche die Befestigungselemente 20.1 und 20.2 eingreifen.

Die Schulter 50 ist dabei in einem Winkel 49, das Zwischenelement 48 im Vergleich zu den in den Fig. 1 bis 3 gezeigten etwas länger ausgebildet. Das Befestigungsteil 32 weist an seinem Innenquerschnitt eine Erweiterung in Richtung auf die hier nicht näher gezeigte Trägerkonstruktion eines Schienenfahrzeugs auf. Der dem Befestigungsteil 32 zugewandte Endbereich des Hülsenrohrs 15 ist am Außenumfang radial ausgebildet, so dass hier im Falle eines Crashs, welcher auch durch das erfindungsgemäße Puffersystem 10 nicht mehr abgefedert werden kann, eine Abschälung des Stößelrohrs 13 des Pufferstößels 12 erfolgen kann, um eine Verletzung der Trägerkonstruktion des Schienenfahrzeugs zu vermeiden. Hier kann auch eine wie in DE 100 37 050 A1 offenbarte Ausnehmung vorgesehen werden.

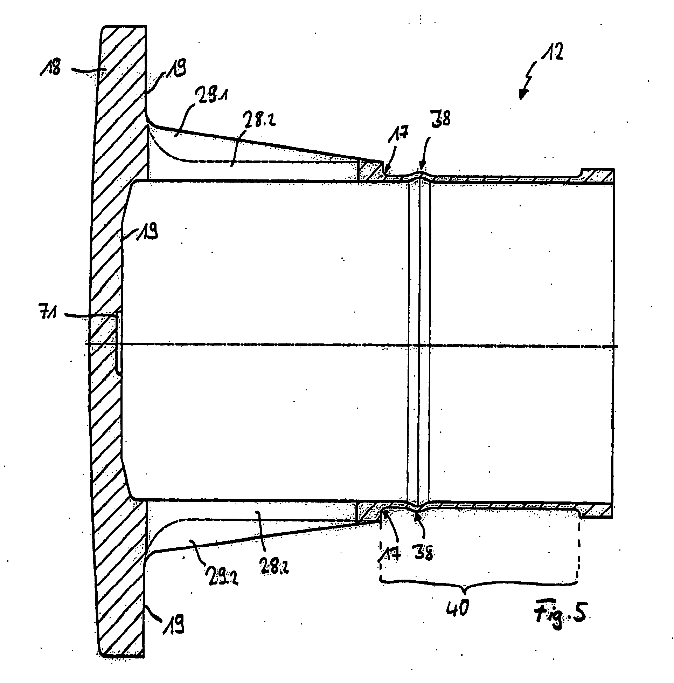

Fig. 5 zeigt im Detail eine Ansicht des erfindungsgemäßen Pufferstößels 12. Dabei weist der in Fig. 5 wiedergegebene Pufferstößel 12 eine Ausnehmung 71 auf, wie diese auch in Fig. 3 gezeigt ist. Diese Ausnehmung 71 kann jedoch auch anders ausgebildet sein, wie beispielsweise in den Fig.1 bis 2, wenn eine Hydraulikkapsel als Dämpfungsteil 16 Einsatz findet. Der Übergangsbereich 17 ist als senkrechte Kante ausgebildet, wobei diese jedoch einen radial ausgebildeten Übergang in den Bereich verringerter Wandstärke 40 aufweist.

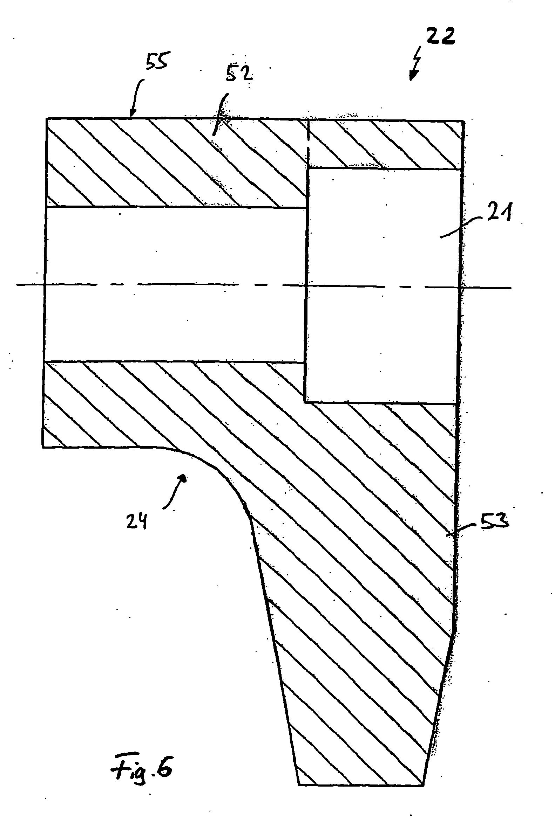

Fig. 6 zeigt nun das Befestigungselement 22, mit welchem ein Pufferstößel 12 mit einem Dämpfungsteil 16 sicher verbunden werden kann, welches gleichzeitig als Passfeder dient. Dabei weist das Befestigungselement 22 eine Bohrung 21 zur Aufnahme beispielsweise von Befestigungsmitteln auf. Der kurze Schenkel 52 des L-förmig ausgebildeten Grundelements 24 zeigt dabei deutlich die Wand 55, mit welcher der Grundkörper 24 zumindest teilflächig und formschlüssig einer entsprechenden Wand des Dämpfungsteils 16 anliegt. Des Weiteren zeigt Fig. 6 den langen Schenkel 53 des L-förmig ausgebildeten Grundkörpers 24 des Befestigungselements 22, welcher an seinem dem kurzen Schenkel 52 abgewandten Ende an seiner Außenkontur leicht abgeschrägt ausgebildet ist und den Passfedersitz in der Langbohrung 28 des Stößels 12 vermittelt.

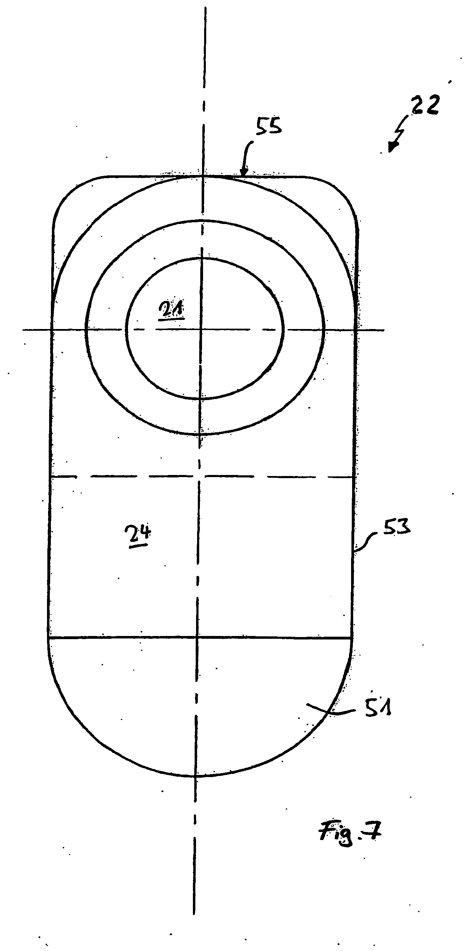

Fig. 7 zeigt den Grundkörper 24 gemäß Fig. 6 des Befestigungselements 22. Dieser weist eine Bohrung 21 und eine Wand 55 am kurzen Schenkel des im Querschnitt L-förmig ausgebildeten Grundkörpers 24 auf. In der Aufsicht gemäß Fig. 7 ist verdeutlicht, dass das Grundelement 24 einen abgekanteten Bereich 51 an dem dem kurzen Schenkel 52 entgegengesetzten Ende des langen Schenkels 53 aufweist, in welchem sich die Stärke des langen Schenkels 53 vermindert.

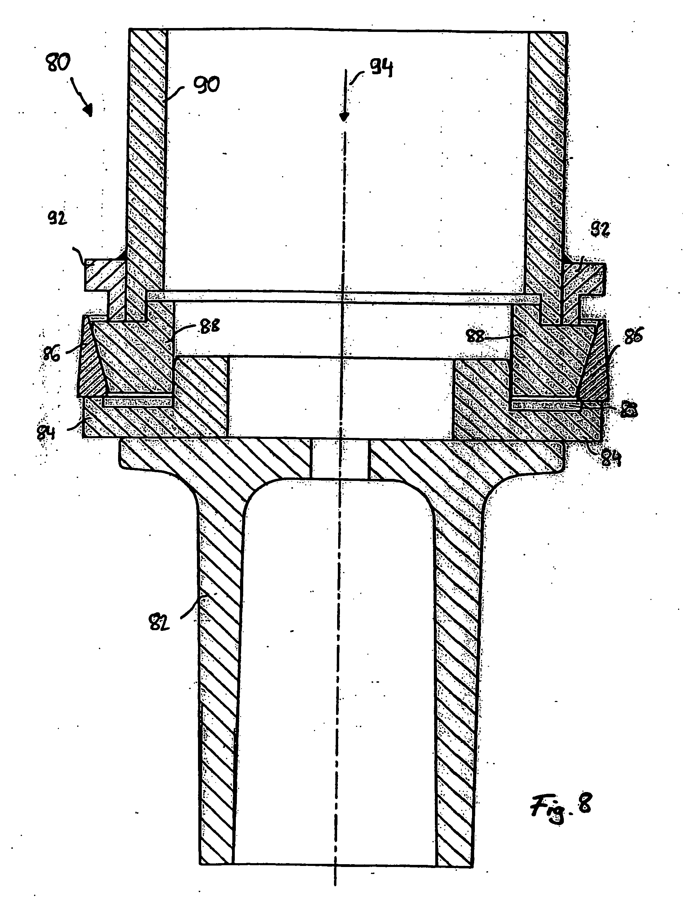

Fig. 8 schließlich zeigt ein insgesamt mit dem Bezugszeichen 80 bezeichnetes Werkzeug zur Herstellung eines erfindungsgemäßen Pufferstößels 12, bestehend aus einer in einen vorgefertigten Pufferstößel, welcher zur Verdeutlichung des Werkzeugs 80 hier nicht gezeigt ist, einstellbare Haltevorrichtung 82, auf welcher ein Abstandselement 84 aufgebracht ist, wodurch die exakte Lage der einzubringenden Querschnittserweiterung 38 einstellbar ist. Dabei können als Abstandselement 84 verschieden große Distanzringe eingesetzt werden. Auf das Abstandselement 84 wird ein Konusring 86 aufgesetzt, welcher über ein Stempelelement 90, welches einen im Wesentlichen komplementär zum Konusring 86 ausgebildeten Gegenring 88 umfasst, bei einer Betätigung in Richtung des Pfeils 94 auf die hier nicht gezeigte Innenwand 19 des Pufferstößels hin arbeitet und so die Querschnittserweiterung einbringt. Dabei wird bei Vortreiben des Stempelelements 90 in Richtung des Pfeils 94 der Gegenring 88 in eine Ausnehmung 89, gebildet durch einen Rücksprung im Abstandselement 64 und dem Gegenring 88 selbst, bewegt. Des Weiteren weist das Werkzeug 80 noch Führungselemente 92 auf, welche ringförmig um das Stempelelement 90 im Inneren des Pufferstößels 12 im Bereich des Stößelrohrs 13 angeordnet sind. Dabei können ein oder mehrere Führungselemente 92 vorgesehen werden. Diese sind insbesondere einstückig als Ring ausgebildet.

Durch das erfindungsgemäße Puffersystem wird somit eine Vorrichtung zur Verfügung gestellt, welche neben den puffernden bzw. dämpfenden Eigenschaften zusätzlich als Deformationswerkzeug ausgebildet ist. Hierdurch ist eine extrem kurze Baulänge vorteilhaft möglich, und das erfindungsgemäße Puffersystem kann in einer Vielzahl von Anwendungen zum Einsatz kommen. Besonders vorteilhaft ist dabei, dass das Dämpfungsteil, sei es eine Hydraulikkapsel oder eine Ringfeder o.ä., nach einem Crash in aller Regel unbeschädigt weiter verwendet werden kann.

## Patentansprüche

1. Pufferstößel für ein Puffersystem, wobei der Pufferstößel (12) einen Pufferteller (18) sowie ein von diesem ausgehendes Stößelrohr (13) umfasst, wobei das Stößelrohr (13) in dem einer Pufferhülse (14) zugewandten Teil einen Bereich verringerter Wandstärke (40) aufweist, **dadurch gekennzeichnet, dass** in dem Bereich verringerter Wandstärke mindestens eine Querschnittserweiterung (38) des Stößelrohres (13) zur Implementierung eines Triggermechanismus bei einem crash, wodurch mindestens eine Feltung des Stößelrohres (13) erhalten wird, angeordnet ist.

2. Puffersystem (10) mit einem Pufferstößel (12) gemäß Anspruch 1, einer Pufferhülse (14) und einem Dämpfungsteil (16).

3. Puffersystem gemäß Anspruch 2, **dadurch gekennzeichnet, dass** im Bereich der mindestens einen Querschnittserweiterung (38) die Wandstärke des Stößelrohrs (13) in etwa gleich ausgebildet ist wie im Bereich der verringerten Wandstärke (40).

4. Puffersystem gemäß einem der Ansprüche 2 oder 3, **dadurch gekennzeichnet, dass** die mindestens eine Querschnittserweiterung (38) nahe eines dem Pufferteller (18) zugewandten Wandstärkenübergangs (17) angeordnet ist.

5. Puffersystem gemäß einem der Ansprüche 2 bis 4, **dadurch gekennzeichnet, dass** die mindestens eine Querschnittserweiterung (38) als am Innenumfang des Stößelrohrs (13) umlaufende Ringnut ausgebildet ist.

6. Puffersystem gemäß Anspruch 5, **dadurch gekennzeichnet, dass** die Ringnut (38) eine radiale Querschnittsform aufweist.

7. Puffersystem gemäß einem der Ansprüche 2 bis 6, **dadurch gekennzeichnet, dass** der Pufferstößel (12) mindestens eine vom Pufferteller (18) ausgehend ausgebildete Langbohrung (28) aufweist zur Aufnahme eines Befestigungselements (22) für das Dämpfungsteil (16).

8. Puffersystem gemäß Anspruch 7, **dadurch gekennzeichnet, dass** an seinem Außenumfang das Stößelrohr (13) im Bereich der mindestens einen Langbohrung (28) Materialanhäufungen (29) aufweist.

9. Puffersystem gemäß Anspruch 8, **dadurch gekennzeichnet, dass** die Materialanhäufungen (29) in Richtung auf den Pufferteller (18) hin zunehmen.

10. Puffersystem gemäß Anspruch 9, **dadurch gekennzeichnet, dass** das Befestigungselement (22) ein etwa L-förmig ausgebildetes Grundelement (24) umfasst, dessen kurzer Schenkel (52) auf der dem Pufferteller (18) zugewandten Seite zumindest teilflächig formschlüssig zu einer Wand (54) des Dämpfungsteils (16) ausgebildet ist.

11. Puffersystem gemäß Anspruch 10, **dadurch gekennzeichnet, dass** der lange Schenkel (53) des Grundelements (24) über seine gesamte Länge in die Langbohrung (28) des Stößelrohrs (13) eingreift.

12. Puffersystem gemäß einem der Ansprüche 2 bis 11, **dadurch gekennzeichnet, dass** die Pufferhülse (14) fest mit dem Dämpfungsteil (16) verbunden ist, wobei die Außenkontur eines Fußbereichs (33) des Dämpfungsteils (16) der Innenkontur eines Kopfbereiches der Hülse (14) bevorzugt formschlüssig angeformt ist.

13. Puffersystem gemäß einem der Ansprüche 2 bis 12, **dadurch gekennzeichnet, dass** die Pufferhülse (14) an ihrem dem Dämpfungsteil (16) zugewandten Ende einen Sitz (44) zur Aufnahme desselben und einen an den Sitz (44) anschließenden rohrartig ausgebildeten Bereich verringerter Wandstärke (46) aufweist, wobei dessen Wandstärke in Richtung auf das dem Dämpfungsteil (16) entgegengesetzte Ende der Pufferhülse (14) zunimmt.

14. Puffersystem gemäß Anspruch 13, **dadurch gekennzeichnet, dass** der Sitz (44) und der Bereich verringerter Wandstärke (46) durch ein Zwischenelement (48) voneinander getrennt sind.

15. Puffersystem gemäß einem der Ansprüche 13 oder 14, **dadurch gekennzeichnet, dass** im Bereich der verringerten Wandstärke (46) eine Innenquerschnittserweiterung des Hülsenrohrs (15) ausgebildet ist.

16. Puffersystem gemäß einem der Ansprüche 13 bis 15, **dadurch gekennzeichnet, dass** der Innenquerschnitt des Hülsenrohrs (15) in Richtung auf das dem Dämpfungsteil (16) entgegengesetzte Ende der Pufferhülse (14) abnimmt.

17. Puffersystem gemäß einem der Ansprüche 14 bis 16, **dadurch gekennzeichnet, dass** das Zwischenelement (48) auf seiner dem Bereich verringerter Wandstärke (46) zugewandten Seite eine abfallende Schulter (50) aufweist.

18. Puffersystem gemäß einem der Ansprüche 14 bis 17, **dadurch gekennzeichnet, dass** das Zwischenelement (48) und der Sitz (44) eine in etwa gleiche Wandstärke aufweisen.

19. Puffersystem gemäß einem der Ansprüche 2 bis 18, **dadurch gekennzeichnet, dass** die Innenwandung (74) des Stößelrohrs (13) zumindest teilweise beabstandet von der Außenwandung (76) des Hülsenrohrs (15) bei einer Betätigung des Puffersystems geführt ist.

20. Puffersystem gemäß einem der Ansprüche 2 bis 19, **dadurch gekennzeichnet, dass** das Dämpfungsteil (16) hydraulisch oder als Federsystem arbeitet.

21. Puffersystem gemäß einem der Ansprüche 2 bis 20, **dadurch gekennzeichnet, dass** das Dämpfungsteil (16) eine Hydraulikkapsel umfasst.

22. Puffersystem gemäß einem der Ansprüche 2 bis 20, **dadurch gekennzeichnet, dass** das Dämpfungsteil (16) eine Ringfeder (66) umfasst.

23. Puffersystem gemäß Anspruch 22, **dadurch gekennzeichnet, dass** die Ringfeder (66) in einem Federbecher (68) aufgenommen ist.

24. Verfahren zur Herstellung eines Pufferstößels (12) **dadurch gekennzeichnet, dass**
- in einem ersten Schritt ein vorgeformter Pufferstößel (12), versehen mit einem Bereich verringerter Wandstärke (40) im Stößelrohr (13), auf eine Haltevorrichtung (82) aufgesetzt wird;
- in einem zweiten Schritt ein Konusring (86) im Inneren des Stößelrohrs (13) angeordnet wird an der Stelle, an der eine mindestens eine Querschnittserweiterung (38) eingebracht werden soll; und
- in einem dritten Schritt sich über ein zum Konusring (86) komplementär ausgebildetes Stempelelement (90) der Konusring (86) in Richtung auf die Innenwandung (19) des Stößelrohrs (13) bewegt und **dadurch** die mindestens eine Querschnittserweiterung (38) eingebracht wird.

25. Verfahren zur Verringerung von Lastpeaks bei der Betätigung eines Puffersystems (10) durch Kontakt eines Pufferstößels (12) mit einem Befestigungsteil einer Pufferhülse (14), wobei entsprechend den Abmessungen des Pufferstößels (12) und der Anordnung desselben im Puffersystem (10) in der Pufferhülse (14) ein Bereich einer Wandstärkenverringerung (40) mit mindestens einer Querschnittserweiterung (38) eines Stößelrohrs (13) des Pufferstößels (12) vorgesehen ist, wodurch der Lastpeak zumindest teilweise kompensiert wird.

## Claims

1. A buffer plunger for a buffer system, wherein the buffer plunger (12) includes a buffer disc (18) and a plunger pipe (13) which projects from the latter, wherein the buffer pipe (13) includes, in the part facing a buffer casing (14), a region of reduced wall thickness (40), **characterised in that** there is arranged in the region of reduced wall thickness at least one portion of widened cross section (38) of the buffer pipe (13), for implementing a trigger mechanism in the event of a crash, as a result of which at least one fold in the buffer pipe (13) is obtained.

2. A buffer system (10) having a buffer plunger (12) according to Claim 1, a buffer casing (14) and a damping part (16).

3. A buffer system according to Claim 2, **characterised in that** in the region of the at least one portion of widened cross section (38) the wall thickness of the plunger pipe (13) is of approximately the same construction as that in the region of reduced wall thickness (40).

4. A buffer system according to either of Claims 2 and 3, **characterised in that** the at least one portion of widened cross section (38) is arranged close to a transition in wall thickness (17) facing the buffer disc (18).

5. A buffer system according to one of Claims 2 to 4, **characterised in that** the at least one portion of widened cross section (38) takes the form of an annular groove which runs around the inner periphery of the plunger pipe (13).

6. A buffer system according to Claim 5, **characterised in that** the annular groove (38) is of radial shape in cross section.

7. A buffer system according to one of Claims 2 to 6, **characterised in that** the buffer plunger (12) includes at least one longitudinal bore (28) which is constructed to project from the buffer disc (18), for receiving a securing element (22) for the damping part (16).

8. A buffer system according to Claim 7, **characterised in that** on its outer periphery the plunger pipe (13) includes accumulated material (29) in the region of the at least one longitudinal bore (28).

9. A buffer system according to Claim 8, **characterised in that** the accumulated material (29) increases in size in the direction of the buffer disc (18).

10. A buffer system according to Claim 9, **characterised in that** the securing element (22) includes a base element (24) which is approximately L-shaped and whereof the short limb (52) is constructed on the side facing the buffer disc (18), at least over part of its surface form-fittingly in relation to a wall (54) of the damping part (16).

11. A buffer system according to Claim 10, **characterised in that** the long limb (53) of the base element (24) engages over its entire length in the longitudinal bore (28) in the plunger pipe (13).

12. A buffer system according to one of Claims 2 to 11, **characterised in that** the buffer casing (14) is fixedly connected to the damping part (16), wherein the external contour of a foot region (33) of the damping part (16) is integrally formed, preferably form-fittingly, with the internal contour of a head region of the casing (14).

13. A buffer system according to one of Claims 2 to 12, **characterised in that** the buffer casing (14) includes, at its end facing the damping part (16), a seating (44) for receiving the latter and a region of reduced wall thickness (46) which is made in the manner of a pipe, adjoining the seating (44), wherein the wall thickness of the region of reduced wall thickness (46) increases in the direction of the opposite end of the buffer casing (14) to the damping part (16).

14. A buffer system according to Claim 13, **characterised in that** the seating (44) and the region of reduced wall thickness (46) are separated from one another by an interposed element (48).

15. A buffer system according to either of Claims 13 and 14, **characterised in that** there is made in the region of reduced wall thickness (46) a portion of widened internal cross section of the casing pipe (15).

16. A buffer system according to one of Claims 13 to 15, **characterised in that** the internal cross section of the casing pipe (15) lessens in the direction of the opposite end of the buffer casing (14) to the damping part (16).

17. A buffer system according to one of Claims 14 to 16, **characterised in that** the interposed element (48) includes, on its side facing the region of reduced wall thickness (46), a downwardly sloping shoulder (50).

18. A buffer system according to one of Claims 14 to 17, **characterised in that** the interposed element (48) and the seating (44) have wall thicknesses of approximately the same size.

19. A buffer system according to one of Claims 2 to 18, **characterised in that** the inner wall (74) of the plunger pipe (13) is guided at least in part at a spacing from the outer wall (76) of the casing pipe (15) when the buffer system is actuated.

20. A buffer system according to one of Claims 2 to 19, **characterised in that** the damping part (16) operates hydraulically or as a sprung system.

21. A buffer system according to one of Claims 2 to 20, **characterised in that** the damping part (16) includes a hydraulic capsule.

22. A buffer system according to one of Claims 2 to 20, **characterised in that** the damping part (16) includes an annular spring (66).

23. A buffer system according to Claim 22, **characterised in that** the annular spring (66) is received in a spring cup (68).

24. A method for making a buffer plunger (12), **characterised in that**
- in a first step, a preformed buffer plunger (12), which is provided with a region of reduced wall thickness (40) in the plunger pipe (13), is placed on a holding device (82);
- in a second step, a conical ring (86) is arranged in the interior of the plunger pipe (13), at the point at which an at least one portion of widened cross section (38) is to be made; and
- in a third step, the conical ring (86) is moved by way of a die element (90), whereof the construction is complementary to that of the conical ring (86), in the direction of the inner wall (19) of the plunger pipe (13) and hence the at least one portion of widened cross section (38) is made.

25. A method for reducing peaks in load when a buffer system (10) is actuated by bringing a buffer plunger (12) into contact with a securing part of a buffer casing (14), wherein, in a manner corresponding to the dimensions of the buffer plunger (12) and the arrangement thereof in the buffer system (10) in the buffer casing (14), a region of reduced wall thickness (40) is provided with at least one portion of widened cross section (38) in a plunger pipe (13) of the buffer plunger (12), as a result of which the peak in load is at least partly compensated.

## Revendications

1. Poussoir de tampon pour un tampon, dans lequel le poussoir de tampon (12) comprend un plateau de tampon (18) ainsi qu'un tube de poussoir (13) partant de celui-ci, dans lequel le tube de poussoir (13) présente dans la partie tournée vers un boisseau de tampon (14) une région d'épaisseur de paroi réduite (40), **caractérisé en ce qu'**au moins un élargissement de section transversale (38) du tube de poussoir (13) est disposé dans la région d'épaisseur de paroi réduite pour la mise en oeuvre d'un mécanisme de déclenchement en cas de collision, ce qui permet d'obtenir au moins un pliage du tube de poussoir (13).

2. Tampon (10) avec un poussoir de tampon (12) selon la revendication 1, un boisseau de tampon (14) et un bloc amortisseur (16).

3. Tampon selon la revendication 2, **caractérisé en ce que**, dans la région dudit au moins un élargissement de section transversale (38), l'épaisseur de paroi du tube de poussoir (13) est sensiblement la même que dans la région d'épaisseur de paroi réduite (40).

4. Tampon selon l'une quelconque des revendications 2 ou 3, **caractérisé en ce que** ledit au moins un élargissement de section transversale (38) est disposé à proximité d'une transition d'épaisseur de paroi (17) tournée vers le plateau de tampon (18).

5. Tampon selon l'une quelconque des revendications 2 à 4, **caractérisé en ce que** ledit au moins un élargissement de section transversale (38) est réalisé sous la forme d'une rainure circulaire s'étendant sur la périphérie intérieure du tube de poussoir (13).

6. Tampon selon la revendication 5, **caractérisé en ce que** la rainure circulaire (38) présente une forme de section transversale radiale.

7. Tampon selon l'une quelconque des revendications 2 à 6, **caractérisé en ce que** le poussoir de tampon (12) présente au moins un alésage longitudinal (28) réalisé à partir du plateau de tampon (18), destiné à recevoir un élément de fixation (22) pour le bloc amortisseur (16).

8. Tampon selon la revendication 7, **caractérisé en ce que** le tube de poussoir (13) présente au niveau de sa périphérie extérieure, des accumulations de matière (29) dans la région dudit au moins un alésage longitudinal (28).

9. Tampon selon la revendication 8, **caractérisé en ce que** les accumulations de matière (29) augmentent en direction du plateau de tampon (18).

10. Tampon selon la revendication 9, **caractérisé en ce que** l'élément de fixation (22) comprend un élément de base (24) réalisé sensiblement en forme de L, dont la branche courte (52) est réalisée sur le côté tourné vers le plateau de tampon (18) au moins en partie à plat en complémentarité de forme avec une paroi (54) du bloc amortisseur (16).

11. Tampon selon la revendication 10, **caractérisé en ce que** la branche longue (53) de l'élément de base (24) s'engage sur toute sa longueur dans l'alésage longitudinal (28) du tube de tampon (13).

12. Tampon selon l'une quelconque des revendications 2 à 11, **caractérisé en ce que** le boisseau de tampon (14) est solidaire du bloc amortisseur (16), dans lequel le contour extérieur d'une zone de pied (33) du bloc amortisseur (16) est façonné de préférence en complémentarité de forme au contour intérieur d'une zone de tête du boisseau (14).

13. Tampon selon l'une quelconque des revendications 2 à 12, **caractérisé en ce que** le boisseau de tampon (14) présente à son extrémité tournée vers le bloc amortisseur (16) un siège (44) destiné à recevoir celle-ci et une région d'épaisseur de paroi réduite (46) réalisée en forme de tube se raccordant au siège (44), dans lequel l'épaisseur de paroi de celle-ci augmente en direction de l'extrémité du boisseau de tampon (14) opposée au bloc amortisseur (16).

14. Tampon selon la revendication 13, **caractérisé en ce que** le siège (44) et la région d'épaisseur de paroi réduite (46) sont séparés l'un de l'autre par un élément intermédiaire (48).

15. Tampon selon l'une quelconque des revendications 13 ou 14, **caractérisé en ce qu'**un élargissement de section transversale intérieure du tube de boisseau (15) est réalisé dans la région d'épaisseur de paroi réduite (46).

16. Tampon selon l'une quelconque des revendications 13 à 15, **caractérisé en ce que** la section transversale intérieure du tube de boisseau (15) diminue en direction de l'extrémité du boisseau de tampon (14) opposée au bloc amortisseur (16).

17. Tampon selon l'une quelconque des revendications 14 à 16, **caractérisé en ce que** l'élément intermédiaire (48) présente un épaulement incliné (50) sur son côté tourné vers la région d'épaisseur de paroi réduite (46).

18. Tampon selon l'une quelconque des revendications 14 à 17, **caractérisé en ce que** l'élément intermédiaire (48) et le siège (44) présentent une épaisseur de paroi sensiblement égale.

19. Tampon selon l'une quelconque des revendications 2 à 18, **caractérisé en ce que** la paroi intérieure (74) du tube de poussoir (13) est guidée au moins en partie à distance de la paroi extérieure (76) du tube de boisseau (15) lors d'un actionnement du tampon.

20. Tampon selon l'une quelconque des revendications 2 à 19, **caractérisé en ce que** le bloc amortisseur (16) opère par voie hydraulique ou par un système à ressort.

21. Tampon selon l'une quelconque des revendications 2 à 20, **caractérisé en ce que** le bloc amortisseur (16) comprend une capsule hydraulique.

22. Tampon selon l'une quelconque des revendications 2 à 20, **caractérisé en ce que** le bloc amortisseur (16) comprend un anneau-ressort (66).

23. Tampon selon la revendication 22, **caractérisé en ce que** le l'anneau-ressort (66) est logé dans une coupelle de ressort (68).

24. Procédé de fabrication d'un poussoir de tampon (12), **caractérisé en ce que**
- dans une première étape, on met un poussoir de tampon préformé (12), pourvu d'une région d'épaisseur de paroi réduite (40) dans le tube de poussoir (13), sur un dispositif de fixation (82);
- dans une deuxième étape, on dispose une bague conique (86) à l'intérieur du tube de poussoir (13), à l'endroit où ledit au moins un élargissement de section transversale (38) doit être réalisé; et
- dans une troisième étape, la bague conique (86) se déplace au moyen d'un élément de poinçon (90) de forme complémentaire à la bague conique (86) en direction de la paroi intérieure (19) du tube de poussoir (13) et on réalise ainsi ledit au moins un élargissement de section transversale (38).

25. Procédé pour réduire des pics de charge lors de l'actionnement d'un tampon (10) par contact d'un poussoir de tampon (12) avec une partie de fixation d'un boisseau de tampon (14), dans lequel il est prévu, en fonction des dimensions du poussoir de tampon (12) et l'agencement de celui-ci dans le tampon (10) dans le boisseau de tampon (14), une région de réduction de l'épaisseur de paroi (40) avec au moins un élargissement de la section transversale (38) d'un tube de poussoir (13) du poussoir de tampon (12), par laquelle le pic de charge est au moins en partie compensé.
